# EUROPEAN PATENT SPECIFICATION

(11) **EP 2 932 316 B1**
(45) Date of publication and mention of the grant of the patent: **29.04.2020**
(21) Application number: 13865229.2
(22) Date of filing: 16.12.2013
(51) Int. Cl.: G02B 5/20, G02F 1/1335, H05B 33/02, B32B 33/00, G02F 1/1334, E06B 9/24

(54) **OPTICAL COMPONENT, GLASS AND LIQUID CRYSTAL DISPLAY**
OPTISCHE KOMPONENTE, GLAS UND FLÜSSIGKRISTALLANZEIGE
COMPOSANT OPTIQUE, VERRE ET DISPOSITIF D'AFFICHAGE À CRISTAUX LIQUIDES

(30) Priority: 17.12.2012 CN 201220700652 U
(43) Date of publication of application: 21.10.2015
(73) Proprietor: Saint-Gobain Glass France, 92400 Courbevoie (FR)
(72) Inventor: WU, Yinglan, Shanghai 200245 (CN); ZHANG, Shuai, Shanghai 200245 (CN)
(74) Representative: Saint-Gobain Recherche
(86) International application number: PCT/CN2013/089520
(87) International publication number: WO 2014/094578

(56) References cited:
- CN-A- 1 650 388
- CN-A- 101 097 676
- CN-U- 203 084 229
- JP-A- 2001 171 175
- US-A1- 2010 271 571
- US-A1- 2011 058 113
- US-A1- 2011 163 659

## Description

### CROSS-REFERENCE TO RELATED APPLICATIONS

The present application claims priority to Chinese patent application No. 201220700652.2, filed on December 17, 2012, and entitled "OPTICAL COMPONENT, GLASS AND LIQUID CRYSTAL DISPLAY".

### FIELD OF THE DISCLOSURE

The present disclosure generally relates to optical material field, and more particularly, to an optical component, a glass and a liquid crystal display.

### BACKGROUND OF THE DISCLOSURE

With the development of technology, a variety of optical products and electronic products have come forth on the market, which continuously improves the quality of life. For example, colored glass can provide the functions of light blocking and privacy protection. As another example, there is a kind of colored privacy glass having a laminated liquid crystal layer. When privacy protection is desired, no voltage should be applied to the laminated liquid crystal layer, so that liquid crystal molecules can be oriented freely, and the privacy glass is opaque or translucent, and colored. When privacy protection is not desired, a voltage should be applied to the laminated liquid crystal layer, so that liquid crystal molecules can have their optical axis be oriented in the direction of an electric field. And the privacy glass is transparent and colored.

Generally, the color of these colored products cannot be eliminated according to customers' will. For example, colored privacy glass is still colored when it becomes transparent. However, in some cases, customers may want to eliminate the color of the colored privacy glass. For example, they may hope a colored privacy glass or a colored vehicle glass to become colorless and transparent temporarily.

US 2011/163659 A1 discloses a radiation emitting arrangement wherein an electroluminescent layer and a filter layer are arranged in this order on a carrier. The filter layer is a saturable wavelength conversion layer. In a switched-off operating state, the electroluminescent layer is switch-off and does not emit light while ambient light incident on the radiation emitting arrangement is absorbed by the filter layer and converted into a different wavelength and scattered, such that the main surface of the carrier layer appears colored and an external observer can be given an opalescent glass-like viewing impression. In a switched-on operating state, the electroluminescent layer is switch-on and emits light of an intensity that is high enough to saturate the filter layer so that the light emitted by electroluminescent layer serves for imaging the main surface of the carrier resulting in a white luminous impression.

US 2010/271571 A1 discloses a privacy filter based on a polymer-dispersed liquid crystal layer.

US 2011/058113 A1 discloses a smart glass which can be controlled between a transparent first state and an opaque or colored second state.

### SUMMARY

In one aspect, an optical component according to appended claim 1 is provided.

Therefore, when the layer of luminescent material emits light, the emitted light substantially compensates for light which is filtered by the layer of light filter material, that is, light penetrating through the optical component is substantially white.

In some embodiments, the luminescent material may be electroluminescent material.

In some embodiments, the layer of luminescent material may include an array of the luminescent material.

In another aspect, a glass according to appended claim 4 is provided.

Therefore, when the layer of luminescent material emits light, the emitted light substantially compensates for light which is filtered by the layer of light filter material, that is, the glass is substantially colorless and transparent. When the layer of luminescent material does not emit light, the layer of light filter material filters a portion of incident light and the glass is colored.

In some embodiments, when the glass includes an optical component which has a layer of electroluminescent material, the glass further includes a first transparent conductive substrate and a second transparent conductive substrate. The electroluminescent material may be located between the first and second transparent conductive substrates and the layer of light filter material may be located on the first transparent conductive substrate and/or the second transparent conductive substrate. When the layer of electroluminescent material is desired to emit light, a voltage is applied between the first and second transparent conductive substrates.

In some embodiments, the glass may further include a third transparent conductive substrate and a layer of liquid crystal material. The third transparent conductive substrate may be located on a side of the second transparent conductive substrate opposite the first transparent conductive substrate. The layer of liquid crystal material may be located between the second and third transparent conductive substrates. The layer of light filter material may be located on the first transparent conductive substrate and/or the third transparent conductive substrate.

In some embodiments, the glass may be a privacy glass. When privacy protection is not desired, a voltage may be applied between the first and second transparent conductive substrates, and the electroluminescent material may emit light having the second wavelength range to compensate for the portion of incident light having the first wavelength range and filtered by the layer of light filter material.

In some embodiments, the transparent conductive substrates may be organic glass or inorganic glass which includes an indium tin oxide layer.

A liquid crystal display including the optical component provided by the present invention is further described.

The foregoing has outlined, rather broadly, features of the present disclosure. It should be appreciated by those skilled in the art that the conception and specific embodiment disclosed may be readily utilized as a basis for modifying the invention within the scope of the appended claims.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1 schematically illustrates a cross-sectional view of an optical component according to one embodiment of the present disclosure;
FIG. 2 schematically illustrates a cross-sectional view of a glass according to one embodiment of the present disclosure;
FIG. 3 schematically illustrates a cross-sectional view of a glass according to another embodiment of the present disclosure; and
FIG. 4 schematically illustrates two states of the glass in FIG. 3.

Corresponding numerals and symbols in different figures generally refer to corresponding parts unless otherwise indicated. The figures are drawn to clearly illustrate the relevant aspects of embodiments of the present disclosure and are not necessarily drawn to scale. To more clearly illustrate certain embodiments, a letter indicating variations of the same structure, material, or process step may follow a figure number.

### DETAILED DESCRIPTION OF THE DISCLOSURE

The making and using of embodiments are discussed in detail below. It should be appreciated, however, that the specific embodiments discussed are merely illustrative, and do not limit the scope of the disclosure.

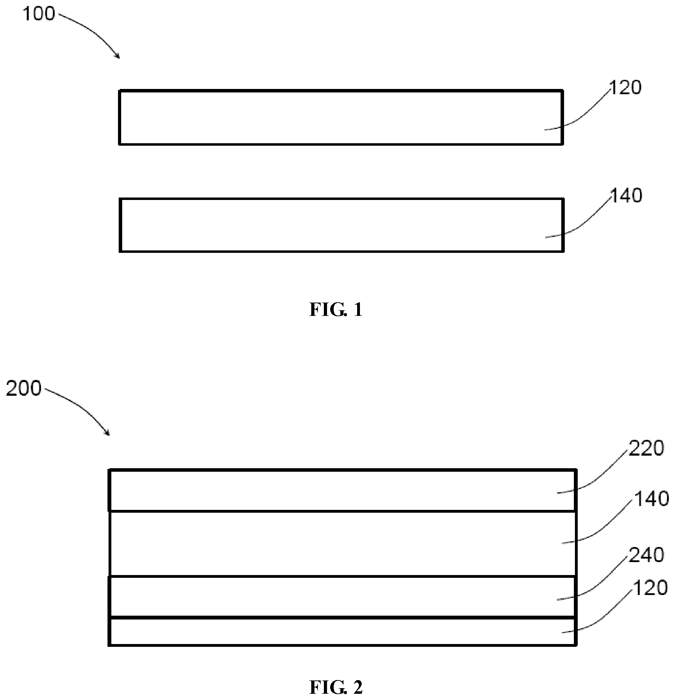

FIG. 1 schematically illustrates a cross-sectional view of an optical component according to one embodiment of the present disclosure. An optical component 100 includes a layer of light filter material 120 and a layer of luminescent material 140. The layer of light filter material 120 is adapted to filter a portion of incident light, the portion having a first wavelength range. The layer of luminescent material 140 is adapted to emit light having a second wavelength range. The first wavelength range substantially coincides with the second wavelength range.

For example, if the incident light is natural light, the layer of light filter material 120 may filter the blue light portion of the incident light having a wavelength range from about 435nm to about 480nm and the layer of luminescent material 140 may emit light having a wavelength range from about 430nm to about 470nm or having a wavelength range from about 420nm to about 490nm.

The first wavelength range "substantially" coinciding with the second wavelength range means that the coincided part has a range that is 90 percent, 80 percent or 70 percent of the first wavelength range or the second wavelength range. Thus, after a portion of the incident light having the first wavelength range is filtered by the layer of light filter material 120, the remained incident light mixes with the light having a second wavelength range emitted by the layer of luminescent material 140 , and the light obtained may have a color substantially the same with the incident light. For example, when the incident light is natural light, the layer of light filter material 120 filters a portion of the incident light having a wavelength range from about 435nm to about 480nm. If the layer of luminescent material 140 does not emit light, light penetrating through the optical component 100 may be yellow. If the layer of luminescent material 140 emits light having a wavelength range from about 430nm to about 470nm, light penetrating through the optical component 100 may be white.

Therefore, a product (such as an optical product, an electronic product and a photoelectric product) which is provided with the optical component 100 allows the customer to set the product to be colored or colorless at his/her will.

Hereinafter, the optical component 100 provided in embodiments of the present disclosure will be described in detail in conjunction with the applications thereof.

FIG. 2 schematically illustrates a cross-sectional view of a glass according to one embodiment of the present disclosure. A glass 200 may include a first transparent conductive substrate 220, a second transparent conductive substrate 240 and an optical component 100. A layer of luminescent material 140 of the optical component 100 includes electroluminescent material and is located between the first and second transparent conductive substrates. A layer of light filter material 120 of the optical component 100 is located on the second transparent conductive substrate 240.

In practice, if light penetrating through the glass 200 is desired to be colored, no voltage needs to be applied between the first and second transparent conductive substrates. If light penetrating through the glass 200 is desired to be white, a voltage needs to be applied between the first and second transparent conductive substrates, so that the layer of electroluminescent material 140 can be excited by an electric field to emit light having a second wavelength range, so as to compensate for light having a first wavelength range and filtered by the layer of light filter material 120.

In some embodiments, the first and second transparent conductive substrates may be organic glass or inorganic glass which includes a conductive layer. In some embodiments, the conductive layer may include indium tin oxide (ITO), aluminum-doped zinc oxide (Al-doped ZnO), a composite layer of titanium, tungsten and aluminum, or a conductive polymer.

It should be understood that the layer of light filter material 120 may include any suitable material and take any suitable shape. In some embodiments, the layer of light filter material 120 may be an optical filter or an optical filter coating attached to the second transparent conductive substrate 240, or chemical material added in a manufacturing process of glass, which should not be limited to the form of slice or film.

It should be further understood that the layer of electroluminescent material 140 may include any suitable material or be formed with any suitable method. For example, the layer of electroluminescent material 140 may be a manganese-doped zinc sulfur (Mn-doped ZnS) layer formed by sputter deposition on a glass having an ITO layer.

The glass 200 may be used in various applications. In one embodiment, the glass 200 is tawny when the layer of luminescent material 140 does not emit light, which is suitable for blocking glare and torridity. If adequate light is desired, the layer of luminescent material 140 may be controlled to emit light. Specifically, a voltage may be applied between the first and second transparent conductive substrates to enable the layer of luminescent material 140 to emit light, so that the glass 200 is substantially colorless and transparent. The glass 200 may be used as a building façade, a vehicle glass, an ornament glass, etc.

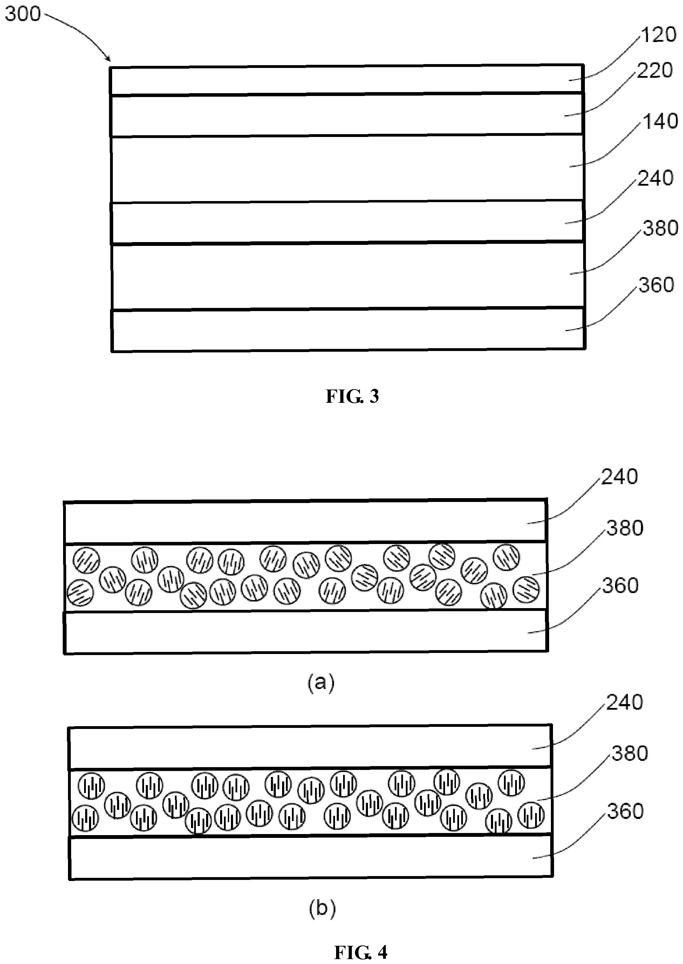

FIG. 3 schematically illustrates a cross-sectional view of a glass according to another embodiment of the present disclosure. Compared with the glass 200 in FIG. 2, a glass 300 shown in FIG. 3 further includes a third transparent conductive substrate 360 and a layer of liquid crystal material 380. The layer of liquid crystal material 380 is located between the second transparent conductive substrate 240 and the third transparent conductive substrate 360.

Other than the functions and advantages of the glass 200, the glass 300 may further provide a privacy protection function.

Referring to FIG. 4(a), when no voltage is applied between the second and third transparent conductive substrates, liquid crystal molecules in the layer of liquid crystal material 380 are freely oriented and light penetrating the layer of liquid crystal material 380 is intensely scattered. As a result, the glass 300 becomes translucent or substantially opaque, which provides a privacy protection function. Referring to FIG. 4(b), when privacy protection is not desired, a voltage may be applied between the second and third transparent conductive substrates, and the liquid crystal molecules in the layer of liquid crystal material 380 have their optical axes oriented in the direction of an electric field, thus the glass 300 becomes transparent.

From the above, the glass 300 having the optical component 100 has following features. When privacy protection is desired, the glass 300 can be translucent or substantially be opaque, and colored. When privacy protection is not desired, the glass 300 can be colorless and transparent.

In one aspect, a liquid crystal display, which includes the optical component 100, is provided. The liquid crystal display may be reflective, transmissive or transflective. In some embodiments, the liquid crystal display may be an E-book reader. Since the layer of luminescent material 140 of the optical component 100 can be controlled to emit light or not, the grounding of the E-book reader may be controlled to be green or white by a user.

It should be understood that, the layer of luminescent material 140 having electroluminescent material has been taken as an example in the above description, however, the material of the layer of luminescent material 140 is not limited to the electroluminescent material. The layer of luminescent material 140 may be made of any material which can emit light when excited by certain conditions. In some embodiments, the layer of luminescent material 140 may include photoluminescent material. Assuming that the optical component 100 is used in a glass, a light guide plate may be disposed near the layer of luminescent material 140 in the glass and a light emitting diode (LED) may be employed as an excitation light source. When the layer of luminescent material 140 is desired to emit light, the LED may be turned on, the light guide plate guides light and the photoluminescent material can be excited to emit light.

Besides, it should be understood that, the layer of luminescent material 140 may be a continuous layer or an array. When the layer of luminescent material 140 is an array, patterns may be chosen to be displayed on a glass or a display by a user.

It will also be readily understood by those skilled in the art that the optical component and the glass of the present invention may be varied within the scope of the appended claims.

## Claims

1. An optical component (100), comprising:
a layer of light filter material (120), adapted to filter out a portion of incident light, the portion having a first wavelength range; and
a layer of luminescent material (140), adapted to be controlled to emit light having a second wavelength range, or not to emit light,
**characterised in that** the first wavelength range substantially coincides with the second wavelength range, meaning that the coincided part has a range that is 70 percent, 80 percent or 90 percent, of the first wavelength range or the second wavelength range so that the emitted light substantially compensates for the portion of the incident light which is filtered out by the layer of light filter material.

2. The optical component according to claim 1, wherein the luminescent material is electroluminescent material.

3. The optical component according to claim 1, wherein the layer of luminescent material comprises an array of the luminescent material.

4. A glass (200, 300) comprising a transparent substrate (220, 240) and an optical component according to any of claims 1 to 3, wherein the layer of light filter material and the layer of luminescent material are located on the transparent substrate.

5. The glass according to claim 4, further comprising:
a first transparent conductive substrate (220); and
a second transparent conductive substrate (240);
wherein the luminescent material is an electroluminescent material and the electroluminescent material is located between the first and second transparent conductive substrates, and the layer of light filter material is located on the first transparent conductive substrate and/or the second transparent conductive substrate.

6. The glass (300) according to claim 5, further comprising:
a third transparent conductive substrate (360), located on a side of the second transparent conductive substrate opposite the first transparent conductive substrate; and
a layer of liquid crystal material (380), located between the second and third transparent conductive substrates;
wherein the layer of light filter material is located on the first transparent conductive substrate and/or the third transparent conductive substrate.

7. The glass according to claim 6, wherein the glass is a privacy glass, and when privacy protection is not desired, a voltage is applied between the first and second transparent conductive substrates, and the electroluminescent material emits light having the second wavelength range to compensate for the portion of incident light having the first wavelength range and filtered out by the layer of light filter material.

8. The glass according to claim 5, wherein the transparent conductive substrates comprise an organic glass or an inorganic glass which comprises an indium tin oxide layer.

## Patentansprüche

1. Eine optische Komponente (100), umfassend:
eine Schicht aus Lichtfiltermaterial (120), die dazu geeignet ist, einen Anteil des einfallenden Lichts herauszufiltern, wobei der Anteil einen ersten Wellenlängenbereich aufweist; und
eine Schicht aus lumineszierendem Material (140), die dazu geeignet ist, gesteuert zu werden, um Licht mit einem zweiten Wellenlängenbereich zu emittieren oder kein Licht zu emittieren, **dadurch gekennzeichnet, dass**
der erste Wellenlängenbereich im Wesentlichen mit dem zweiten Wellenlängenbereich zusammenfällt, was bedeutet, dass der zusammenfallende Teil einen Bereich aufweist, der 70 Prozent, 80 Prozent oder 90 Prozent des ersten Wellenlängenbereichs oder des zweiten Wellenlängenbereichs beträgt, sodass das emittierte Licht den Anteil des einfallenden Lichts, der durch die Schicht aus Lichtfiltermaterial herausgefiltert wird, im Wesentlichen kompensiert.

2. Optische Komponente nach Anspruch 1, wobei das lumineszierende Material ein elektrolumineszierendes Material ist.

3. Optische Komponente nach Anspruch 1, wobei die Schicht aus lumineszierendem Material eine Anordnung des lumineszierenden Materials umfasst.

4. Glas (200, 300), das ein transparentes Substrat (220, 240) und eine optische Komponente nach einem der Ansprüche 1 bis 3 umfasst, wobei die Schicht aus Lichtfiltermaterial und die Schicht aus lumineszierendem Material auf dem transparenten Substrat angeordnet sind.

5. Glas nach Anspruch 4, ferner umfassend:
ein erstes transparentes leitfähiges Substrat (220); und
ein zweites transparentes leitfähiges Substrat (240);
wobei das lumineszierende Material ein elektrolumineszierendes Material ist und das elektrolumineszierende Material zwischen dem ersten und dem zweiten transparenten leitfähigen Substrat angeordnet ist und die Schicht aus Lichtfiltermaterial auf dem ersten transparenten leitfähigen Substrat und/oder dem zweiten transparenten leitfähigen Substrat angeordnet ist.

6. Glas (300) nach Anspruch 5, ferner umfassend:
ein drittes transparentes leitfähiges Substrat (360), das auf einer Seite des zweiten transparenten leitfähigen Substrats gegenüber dem ersten transparenten leitfähigen Substrat angeordnet ist; und
eine Schicht aus Flüssigkristallmaterial (380), die zwischen dem zweiten und dem dritten transparenten leitfähigen Substrat angeordnet ist;
wobei die Schicht aus Lichtfiltermaterial auf dem ersten transparenten leitfähigen Substrat und/oder dem dritten transparenten leitfähigen Substrat angeordnet ist.

7. Glas nach Anspruch 6, wobei das Glas ein Sichtschutzglas ist, und eine Spannung zwischen dem ersten und dem zweiten transparenten leitfähigen Substrat angelegt wird und das elektrolumineszierende Material Licht mit dem zweiten Wellenlängenbereich emittiert, um den Anteil des einfallenden Lichts mit dem ersten Wellenlängenbereich zu kompensieren, der von der Schicht aus Lichtfiltermaterial herausgefiltert wird, wenn ein Sichtschutz nicht erwünscht ist.

8. Glas nach Anspruch 5, wobei die transparenten leitfähigen Substrate ein organisches Glas oder ein anorganisches Glas umfassen, das eine Indiumzinnoxidschicht aufweist.

## Revendications

1. Composant optique (100), comprenant :
une couche de matière filtrant la lumière (120), conçue pour filtrer une partie de la lumière incidente, ladite partie comportant une première plage de longueurs d'onde ; et
une couche de matière luminescente (140), conçue pour être commandée pour émettre la lumière comportant une deuxième plage de longueurs d'onde ou pour ne pas émettre de lumière, **caractérisé en ce que**
la première plage de longueurs d'onde coïncide sensiblement avec la deuxième plage de longueurs d'onde, ce qui signifie que la partie coïncidée comporte une plage, laquelle est de 70 pour-cent, 80 pour-cent ou 90 pour-cent de la première plage de longueurs d'onde ou de la deuxième plage de longueurs d'onde de telle sorte que la lumière émise compense sensiblement la partie de la lumière incidente, laquelle est filtrée par la couche de matière filtrant la lumière.

2. Composant optique selon la revendication 1, dans lequel la matière luminescente est une matière électroluminescente.

3. Composant optique selon la revendication 1, dans lequel la couche de matière luminescente comprend un réseau de la matière luminescente.

4. Verre (200, 300) comprenant un substrat transparent (220, 240) et un composant optique selon l'une quelconque des revendications 1 à 3, dans lequel la couche de matière filtrant la lumière et la couche de matière luminescente sont situées sur le substrat transparent.

5. Verre selon la revendication 4, comprenant en outre :
un premier substrat conducteur transparent (220) ; et
un deuxième substrat conducteur transparent (240) ;
dans lequel la matière luminescente est une matière électroluminescente et la matière électroluminescente est située entre les premier et deuxième substrats conducteurs transparents et la couche de matière filtrant la lumière est située sur le premier substrat conducteur transparent et/ou le deuxième substrat conducteur transparent.

6. Verre (300) selon la revendication 5, comprenant en outre :
un troisième substrat conducteur transparent (360), situé sur un côté du deuxième substrat conducteur transparent opposé au premier substrat conducteur transparent ; et
une couche de matière à cristaux liquides (380), située entre les deuxième et troisième substrats conducteurs transparents ;
dans lequel la couche de matière filtrant la lumière est située sur le premier substrat conducteur transparent et/ou le troisième substrat conducteur transparent.

7. Verre selon la revendication 6, dans lequel le verre est un verre opaque et, lorsqu'une protection opaque n'est pas souhaitée, une tension est appliquée entre les premier et deuxième substrats conducteurs transparents et la matière électroluminescente émet la lumière comportant la deuxième plage de longueurs d'onde pour compenser la partie de la lumière incidente comportant la première plage de longueurs d'onde et filtrée par la couche de matière filtrant la lumière.

8. Verre selon la revendication 5, dans lequel les substrats conducteurs transparents comprennent un verre organique ou un verre inorganique, lequel comprend une couche d'oxyde d'indium et d'étain.
